## Europäisches Patentamt

## European Patent Office

## Office européen des brevets

(11) Veröffentlichungsnummer: **0 132 682**
**B1**

(19)

(12) # EUROPÄISCHE PATENTSCHRIFT

(45) Veröffentlichungstag der Patentschrift:
25.01.89

(51) Int. Cl.⁴: **C 09 C 1/24**

(21) Anmeldenummer: **84108007.0**

(22) Anmeldetag: **09.07.84**

(54) Neue Eisenoxidgelbpigmente mit niedrigem Silking-Effekt sowie Verfahren zu deren Herstellung.

(30) Priorität: **23.07.83 DE 3326632**

(43) Veröffentlichungstag der Anmeldung:
**13.02.85 Patentblatt 85/7**

(45) Bekanntmachung des Hinweises auf die Patenterteilung:
**25.01.89 Patentblatt 89/4**

(84) Benannte Vertragsstaaten:
**BE DE FR GB IT NL**

(56) Entgegenhaltungen:
**DE-A-3 026 686**
**US-A-4 376 656**

**JOURNAL OF SCIENTIFIC AND INDUSTRIAL RESEARCH, Band 36, Nr. 1, Januar 1977, Seiten 25-31, New Delhi, IN; A. SURYANARAYANA et al.: "Iron oxide pigments: "Part II - methods for preparation of synthetic yellow, black and brown iron oxides"**

Die Akte enthält technische Angaben, die nach dem Eingang der Anmeldung eingereicht wurden und die nicht in dieser Patentschrift enthalten sind.

(73) Patentinhaber: **BAYER AG, Konzernverwaltung RP Patentabteilung, D-5090 Leverkusen 1 Bayerwerk (DE)**

(72) Erfinder: **Burow, Wilfried, Dr., Sollbrüggenstrasse 33, D-4150 Krefeld (DE)**
Erfinder: **Printzen, Helmut, Dr., Heckschenstrasse 93, D-4150 Krefeld (DE)**
Erfinder: **Brunn, Horst, Dr., Doerperhofstrasse 39, D-4150 Krefeld (DE)**
Erfinder: **Nollen, Klaus, Dr., Rickfeldsweg 25, D-4150 Krefeld- Verberg (DE)**

EP 0 132 682 B1

**Beschreibung**

Die vorliegende Erfindung betrifft Eisenoxidpigmente mit niedrigem Silking-Effekt, Verfahren zu deren Herstellung und ihre Verwendung.

Gelbe Eisen (III) oxidhydratpigmente können hergestellt werden durch Fällung von Eisensalzlösungen und Oxidation mit Luft (US-PS 2 388 659) oder anderen Oxidationsmitteln, gegebenenfalls in Gegenwart von metallischem Eisen (DE-PS 902 163), oder durch Oxidation von metallischem Eisen mit Oxidationsmitteln, insbesondere mit aromatischen Nitroverbindungen (DE-PS 515 758).

Die auf diese Weise hergestellten Gelbpigmente finden Verwendung in der Baustoff-, Kunststoff- und Lackindustrie.

Für die optischen Eigenschaften der Eisenoxidgelbpigmente sind in erster Linie die Teilchengröße und das Längen/Breiten-Verhältnis der mehr oder weniger nadelförmigen Teilchen verantwortlich. Mit zunehmendem Längen/Breiten -Verhältnis werden die Pigmente heller und farbreiner.

Bei Anstrichen, die ausrichtbare, ausgeprägt nadelförmige, also helle und farbreine Eisenoxidgelbpigmente enthalten, treten von der Beobachtungsrichtung abhängige, deutlich wahrnehmbare Farbunterschiede (Silking-Effekt) auf, falls sich die Pigmentteilchen bei der Verarbeitung im Lack oder in Folie in einer Vorzugsrichtung parallel zur Nadelachse orientieren. Solche von der Beobachtungsrichtung abhängige Farbunterschiede sind von bunten Seidengeweben (Seide, engl. silk) bekannt. Da übliches Eisenoxidgelb in Längsrichtung zu den Nadeln einen anderen Absorptions- und Streukoeffizienten als senkrecht dazu hat, ist der Silking-Effekt und somit der Farbunterschied am größten, wenn die Nadeln einmal senkrecht und ein zweites Mal parallel zur Beobachtungsrichtung ausgerichtet sind. Störende Farbschattierungen beobachtet man, wenn Flächen mit unterschiedlicher Orientierung des nadelförmigen Pigments aneinanderstoßen. Sie fallen von den Ecken von Tür- oder Fensterrahmen auf, wenn die nadelförmigen Pigmente beim Streichen an den senkrechten Leisten parallel und an den waagerechten Leisten senkrecht zur Beobachtungsrichtung ausgerichtet werden.

Besonders störend ist der sogenannte Bilderrahmeneffekt, der auftritt, wenn zum Schluß von Streicharbeiten an einer größeren Fläche der Maler nochmals am Rand entlang streicht, um diesen zu egalisieren. Da die nadelförmigen Pigmente so am Rand der Fläche in einer Vorzugsrichtung ausgerichtet werden, gewinnt man den Eindruck, daß die Fläche mit einer anderen Farbe eingerahmt ist.

Den Silking-Grad von Eisenoxidgelbpigmente kann man dadurch senken, daß man nadelförmige Eisenoxidpigmente mit isometrischen Gelbpigmenten wie Nickelrutilgelb mischt. Isometrische Pigmente zeigen naturgemäß keinen Silking-Effekt.

Isometrische Eisenoxidgelbpigmente selbst sind dunkel und ungesättigt im Farbton. Andere isometrische Gelbpigmente hingegen sind um ein Vielfaches teurer als Eisenoxidpigmente.

Der vorliegenden Erfindung liegt daher die Aufgabe zugrunde, helle, farbreine Eisenoxidgelbpigmente bereitzustellen, die die unerwünschten optischen Eigenschaften des "Silking" praktisch nicht mehr aufweisen.

Dieses Ziel wird durch hochverzweigte nadelförmige Eisenoxidgelbpigmente erreicht, die einen derartig hohen Verzweigungsgrad haben, so daß sie sich praktisch optisch wie isometrische Pigmente verhalten und einen praktisch nicht mehr wahrnehmbaren Silking-Effekt $\Delta E_1^* \leqslant 0,5$ (siehe weiter unten) mit den gewünschten günstigen koloristischen Eigenschaften vereinen.

Gegenstand der vorliegenden Erfindung sind somit Eisenoxidgelbpigmente mit einem Silking-Effekt $\Delta E_1^* \leqslant 0,5$, dadurch gekennzeichnet, daß deren koloristische Werte für L* zwischen 52 und 63, für a* zwischen 8 und 14 und für b* zwischen 40 und 48 CIELAB-Einheiten, gemessen nach DIN 6174 bei einer 10 %-igen Pigmentvolumen-Konzentration (PVK) im Lack Alkydal F 48 (Handelsprodukt der BAYER AG), einem mittelöligen Fettsäure-modifizierten Alkydharz mit einem Fettsäuregehalt - ausgedrückt als Triglycerid - von ca. 48 %, betragen.

Besonders bevorzugt sind dabei solche Eisenoxidgelbpigmente, deren Werte für L* zwischen 54 und 61, für a* zwischen 8,5 und 13 und für b* zwischen 42 und 48 CIELAB-Einheiten betragen.

Gegenstand der vorliegenden Erfindung ist auch ein Verfahren der Herstellung der erfindungsgemäßen Pigmente.

Überraschenderweise gelingt ihre Herstellung in einem zweistufigen Verfahren, wobei man die Keimbildung von nadelförmigen $\alpha$-FeOOH-Gelbpigmenten in Gegenwart von Verbindungen der Elemente B, Al, Ga, Si, Ge, Sn oder Pb in Mengen von 0,05 bis 10 Gew.-%, berechnet als 3- oder 4-wertige Oxide und bezogen auf das bei der Keimbildung ausgefällte $\alpha$-FeOOH, vornimmt und auf den $\alpha$-FeOOH-Keim in üblicher Weise ein Eisenoxidgelbpigment aufwachsen läßt.

In der ersten Verfahrensstufe stellt man also einen $\alpha$-FeOOH-Keim in Gegenwart von Verbindungen mit einem Gehalt von 0,05 bis 10 Gew.-% aus B, Al, Ga oder Si, Ge, Sn, Pb bezogen auf das bei der Keimbildung ausgefällte $\alpha$-FeOOH her. Die Bildung dieses Keimes kann gemäß den bekannten Herstellverfahren aus Eisen-(II)-Salzlösungen bei Raumtemperatur oder erhöhter Temperatur erfolgen. Als Eisen-(II)-Salzlösungen kommen Eisen-(II)-sulfat- und Eisen-(II)-chloridlösungen in Frage. Als geeignete basische Fällungsmittel seien Alkali- und Erdalkalioxide bzw. -hydroxide und -carbonate sowie Ammoniak genannt. Das Oxidieren der Eisen-(II)-hydroxide führt man vorzugsweise durch Einleiten von Luft durch, jedoch können grundsätzlich auch andere Oxidationsmittel bei der Keimbildung verwendet werden, wie Sauerstoff, Chlor, Salpetersäure oder Nitrate, Chlorate und insbesondere organische Nitroverbindungen, wie Nitrobenzol. Bei der zweiten Verfahrensstufe läßt man auf den erfindungsgemäß hergestellten Gelbkeim ein Pigment aufwachsen. Dieser Schritt, Pigmentbildung genannt, kann gemäß den unterschiedlichen bekannten Herstell-Verfahren erfolgen, wie durch Auffällen unter Zugabe von Eisen-(II)-salzen, Fällungsmitteln und Oxidation mit Luft oder anderen Oxidationsmitteln, gegebenenfalls in Gegenwart von metallischen Eisen, oder durch Oxidation von metallischen Eisen mit aromatischen Nitroverbindungen (DE-OS 3 028 679).

Beide Verfahrensschritte können nach aus dem Stand der Technik bekannten Varianten durchgeführt werden.

Im allgemeinen ist es bei der Keimbildung ausreichend, wenn die Menge der Verbindungen 0,15 bis 7 Gew.-%, bezogen auf das bei der Keimbildung ausgefällte $\alpha$-FeOOH, beträgt.

Als besonders bevorzugte Verbindungen im Sinne dieser Erfindung sind Silikate und Aluminate zu nennen.

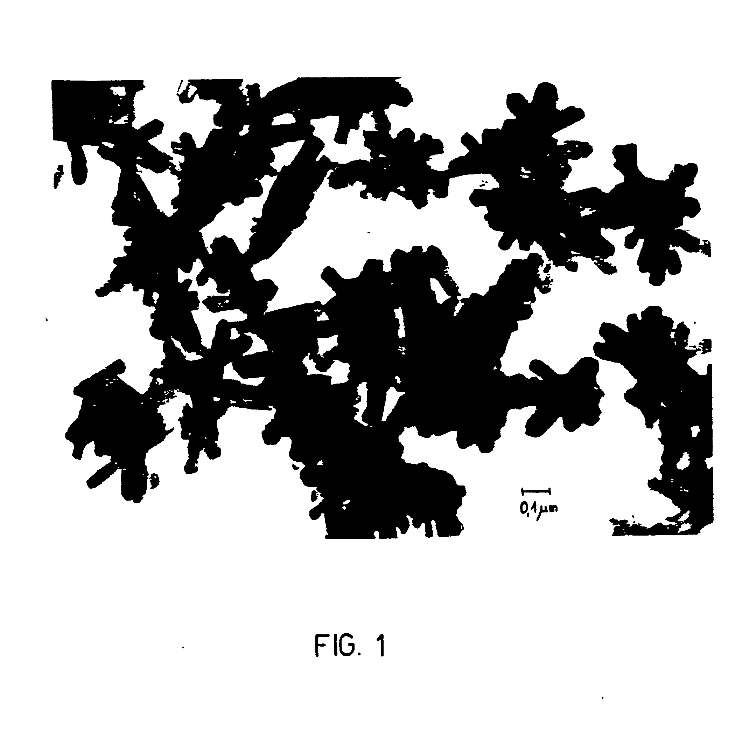

Man erhält "Igel-förmige" niedrig silkende Eisenoxidgelbpigmente (s. Fig. 1), die schonend gemahlen werden sollten, wie es bei Eisenoxidgelbpigmente üblich ist.

Die erfindungsgemäß hergestellten Pigmente können relativ leicht und schnell über eine farbmetrische Bestimmung des Silking-Effekts von anderen Gelbpigmenten unterschieden werden.

Da der Silking-Effekt visuell am größten ist, wenn Flächen aneinandergrenzen, in denen das nadelförmige Gelbpigment einmal in und einmal quer zur Beobachtungsrichtung ausgerichtet ist, wird der dabei auftretende Farbabstand als Maß für die Größe des Silking-Effektes verwendet. Zur Ermittlung des Silking-Effektes wird die Messung des Farbabstandes zwischen normaler Probe mit dem in einer Vorzugsrichtung ausgerichteten Pigment und der um 90° gedrehten Probe benutzt. Der ermittelte Gesamtfarbabstand ist ein Maß für die Größe des Silking-Effektes.

Die Vorzugsrichtung wird durch die Streich-, Walz-, Aufzieh- oder Rub-out-Richtung der Probe bestimmt (U. Kaluza, Phys. chem. Grundlagen der Pigmentverarbeitung für Lacke und Druckfarben, Filderstadt 1980, S. 91 + 92).

Durchführung:

0,800 g Pigment (entspricht 10 % PVK in trockenen Lackfilm) werden mit der Hälfte (Gesamtmenge 4,35 cm³ $\hat{=}$ 4,09 g) der erforderlichen Bindemittellösung Alkydal F 48 (Handelsprodukt der BAYER AG, Dichte 0,94 g/cm³; Trockenrückstand 44 %) auf der unteren Platte einer Farbenausreibemaschine (Fa. Engelsmann, Ludwigshafen), angemaischt (1 Zusatzgewicht 2,5 kg). Angerieben wird mit 100 Umdrehungen. Danach wird die Paste aufgenommen, außerhalb des Mittelpunktes der Glasplatte verteilt und mit der 2. Hälfte der Bindemittellösung aufgelackt.

Nach weiteren 100 Umdrehungen (Farbenausreibemaschine ohne jede Belastung) wird die Anreibung sofort auf eine weiß, einseitig kaschierte Papptafel mit dem Filmzieher (Spaltbreite 8 cm, Spalthöhe 150 µm) aufgezogen. Beschichtet wird die kaschierte Seite.

Nach 25 Min. Trockenzeit (die Zeit kann sich bei Wechsel der Trockenbedingungen, wie Temperatur und Luftfeuchte, ändern) bleibt das 1. Dritte (Feld 1) des Abzuges ohne weitere Behandlung. Das 2. Drittel (Feld 2) des Abzuges wird mit möglichst gleichmäßigem Druck auf die Zeigefingerspitze quer zur Aufziehrichtung (immer von links nach rechts und das 3. Drittel (Feld 3) in Aufziehrichtung gerieben (Rub-out).

Aus dem über Nacht getrockneten Abzug werden die Farbwerte $R_x$, $R_y$, $R_z$ der Felder 1 bis 3 jeweils parallel und um 90° gedreht zur Aufziehrichtung gemessen. Der Farbabstand $\Delta E_{ab}^*$ zwischen den Farbwerten jedes einzelnen Feldes wird berechnet. Aus den Farbabständen der drei Felder kann man die Höhe des Silking-Effektes ablesen. Die Messung erfolgt mit einem Farbmeßgerät "Color-Master" mit 45/0°-Geometrie mit den Farbfiltern FMX/C, FMY/C, FMZ/C und einem Emailstandard als Sekundärstandard.

Tabelle

CIELAB-Farbabstand nach DIN 6174 [CIELAB C/2 grd] für Feld 1
(8 grd/d)

| Meßwerte | | $R_{x1}$ | $R_{y1}$ | $R_{z1}$ | $L_1^*$ | $a_1^*$ | $b_1^*$ | $C_1^*$ | $h_1$ |
|---|---|---|---|---|---|---|---|---|---|
| Feld 1 | paralell | 33,89 | 24,18 | 3,85 | 56,3 | 14,9 | 57,1 | 59,0 | 75,4 |
| | 90° gedreht | 33,77 | 24,04 | 3,74 | 56,1 | 15,1 | 57,5 | 59,4 | 75,3 |

| | | $\Delta E_1^*$ | $\Delta L_1^*$ | $\Delta a_1^*$ | $\Delta b_1^*$ | $\Delta C_1^*$ | $\Delta H_1^*$ | $\Delta h_1$ |
|---|---|---|---|---|---|---|---|---|
| | Farbabstand | 0,5 | - 0,1 | 0,1 | 0,4 | 0,4 | - 0,0 | - 0,0 |

Im Rechenbeispiel der Tabelle ergibt sich der Gesamtfarbabstand des Feldes 1 $\Delta E_1^*$ als Maß für das Silking-Verhalten mit 0,5.

Die Werte $\Delta E_2^*$ und $\Delta E_3^*$ für die Felder 2 und 3 werden in gleicher Weise aus den Meßwerten der Felder 2 und 3 berechnet. Bei den Messungen von $\Delta E_2^*$ und $\Delta E_3^*$ handelt es sich um Doppelbestimmungen. Hier wird der bei Feld 1 nicht durchgeführte "Rub-out" manuell einmal senkrecht (Feld 2) und einmal parallel (Feld 3) zur Aufziehrichtung ausgeführt. Die Beträge $\Delta E_2^*$ und $\Delta E_3^*$ sind bei gleichwertiger manueller Ausführung des "Rub-out" in Feld 2 und Feld 3 gleich. Ihre Aufspaltungsbeträge $\Delta L_2^*$, $\Delta a_2^*$ bis $\Delta h_2$, bzw. $\Delta L_3^*$, $\Delta a_3^*$ bis $\Delta h_3$ müssen umgekehrte Vorzeichen tragen.

Die erfindungsgemäßen Eisenoxidpigmente sind gut geeignet für die Einfärbung von Lacken und Kunststoffolien.

Nachfolgend wird das erfindungsgemäße Verfahren beispielhaft erläutert, ohne daß dadurch eine Einschränkung der Erfindung vorgenommen wird.

**Beispiel 1**

In einem Edelstahlbehälter werden zu 6,804 l $FeSO_4$ -Lösung, die 1020,6 g $FeSO_4$ enthält, 55,8 g $Na_2SiO_3.9H_2O$ (gelöst in 150 ml $H_2O$) gegeben und in 30 Min. auf 55°C geheizt. Die $FeSO_4$-Lösung wird mit 750 ml 9nNaOH versetzt und bei 55°C solange mit 450 l/h Luft oxidiert, bis der pH-Wert $\leqslant$ 2,8 beträgt. Die pH-Messung erfolgt mit Glaselektrode in der Suspension. Zu 2,4 l der so erhaltenen Gelbkeimsuspension werden unter Stickstoff 9,6 l $H_2O$ hinzugefügt und wird unter Stickstoff auf 80°C aufgeheizt. Anschließend werden bei 80°C und Begasung mit 1000 l/h Luft 4,26 l 4,75nNaOH und 6,9 l $FeSO_4$, die 1380 g $FeSO_4$ enthalten, in 12 h so zugetropft, daß der pH in der Suspension konstant bleibt und 4,0 $\pm$ 0,1 beträgt. Das sulfatfreie gewaschene, getrocknete Produkt wird im Dismembrator gemahlen.

**Beispiel 2**

In einem Edelstahlbehälter werden zu 9,72 l $FeSO_4$-Lösung, die 1458 g $FeSO_4$ enthält, 25,71 g $Al_2(SO_4)_3.18H_2O$ (gelöst in 71 ml $H_2O$), gegeben und in 30 Min. auf 55°C geheizt. Die $FeSO_4$-Lösung wird mit 1072 ml 9nNaOH versetzt und bei 55°C solange mit 650 l/h Luft oxidiert, bis der pH-Wert $\leqslant$ 2,8 beträgt. In 2,484 l der so erhaltenen Gelbkeimsuspension werden unter Stickstoff 7,516 l $H_2O$ hinzugefügt und wird unter Stickstoff auf 80°C aufgeheizt. Anschließend werden bei 80°C und Begasung mit 100 l/h Luft 6,9 l 4,75 nNaOH und 10,74 l $FeSO_4$, die 2148 g $FeSO_4$ enthalten, in 18 h so zugetropft, daß der pH in der Suspension konstant 4,0 $\pm$ 0,1 beträgt. Das sulfatfrei gewaschene Produkt wird im Dismembrator gemahlen.

**Beispiel 3**

In einem Edelstahlbehälter werden zu 15,309 l $FeSO_4$ -Lösung, die 3061,8 g $FeSO_4$ enthält, 167,4 g $Na_2SiO_3.2H_2O$ (gelöst in 400 ml $H_2O$) gegeben und in 30 Minuten auf 55°C geheizt. Bei $FeSO_4$-Lösung wird mit 2250 ml 9nNaOH versetzt und bei 55°C solange mit 450 l/h Luft oxidiert, bis der pH-Wert $\leqslant$ 2,8 beträgt. Zu 2,781 l der so erhaltenen Gelbkeimsuspension werden unter Stickstoff 7,129 l $H_2O$ hinzugefügt und wird unter Stickstoff auf 80°C aufgeheizt. Anschließend werden bei 80°C und Begasung mit 1000 l/h Luft 6,62 l 4,75 n NaOH und 11, 18 l $FeSO_4$, die 2236 g $FeSO_2$ enthalten, in 12 h so zugetropft, daß der pH in der Suspension konstant 4,0 $\pm$ 0,1 beträgt. Das sulfatfrei gewaschene, getrocknete Produkt wird im Dismembrator gemahlen.

**Beispiel 4**

In einem Edelstahlbehälter werden zu 15,309 l $FeSO_4$ -Lösung die 3061,8 g $FeSO_4$ enthält, 117 g $Al_2(SO_4)_3.18H_2O$ (gelöst in 250 ml $H_2O$) gegeben und in 30 Minuten auf 55°C geheizt. Die $FeSO_4$-Lösung wird mit 2250 ml 9 n NaOH versetzt und bei 55°C solange mit 400 l/h Luft oxidiert, bis der pH-Wert $\leqslant$ 2,8 beträgt. Zu 2,777 l der so erhaltenen Gelbkeimsuspension werden unter Stickstoff 7,129 l $H_2O$ hinzugefügt und wird unter Stickstoff auf 80°C aufgeheizt. Anschließend werden bei 80°C und Begasung mit 1000 l/h Luft 10,746 l $FeSO_4$, die 2149,2 g $FeSO_4$ enthalten und 7,530 l 4,75 n NaOH in 12 h so zugetropft, daß der pH in der Suspension konstant 4,0 $\pm$ 0,1 beträgt. Das sulfatfrei gewaschene, getrocknete Produkt wird im Dismembrator gemahlen.

**Tabelle 4:**

Farbdaten und Silking-Effekt von erfindungsgemäß hergestellten Eisenoxidpigmenten

| Beispiel | $\Delta E_1^*$ | $\Delta E_2^*$ | $\Delta E_3^*$ | $L^*$ | $a^*$ | $b^*$ |
|---|---|---|---|---|---|---|
| 1 | 0,3 | 0,3 | 0,2 | 55,2 | 9,5 | 40,0 |
| 2 | 0,4 | 0,5 | 0,6 | 58,1 | 9,3 | 44,9 |
| 3 | 0,2 | 0,4 | 0,3 | 55,7 | 9,9 | 44,9 |
| 4 | 0,1 | 0,6 | 0,7 | 54,9 | 12,1 | 40,0 |
| 5 | 0,3 | 0,9 | 1,0 | 55,1 | 12,9 | 41,4 |
| 6 | 0,9 | 2,3 | 2,3 | 59,4 | 11,4 | 43,7 |
| 7 | 0,2 | 0,9 | 0,7 | 55,8 | 12,2 | 42,1 |
| 8 | 0,4 | 1,3 | 1,1 | 58,4 | 9,6 | 44,0 |

4

**Beispiel 5**

Entsprechend der in Beispiel 3 erhaltenen Vorschrift hergestelltes, gewaschenes und getrocknetes Eisenoxidgelbpigment wird in der Schlagkreuzmühle gemahlen.

**Beispiel 6**

Entsprechend der in Beispiel 3 enthaltenen Vorschrift hergestelltes, gewaschenes und getrocknetes Eisenoxidgelbpigment wird in der Dampfstrahlmühle (Produkt/Dampfverhältnis 1 : 3) gemahlen.

**Beispiel 7**

In einem Edelstrahlbehälter werden zu 15,309 l $FeSO_4$-Lösung, die 3061,8 g $FeSO_4$ enthält, 351 g $Al_2(SO_4)_3 \cdot 18H_2O$ (gelöst in 400 ml Lösung wird mit 2250 ml 9 n NaOH versetzt und bei 55°C solange mit 400 l/h Luft oxidiert, bis der pH-Wert $\leqslant$ 2,8 beträgt. Zu 2,978 l der so erhaltenen Gelbkeimsuspension werden unter Stickstoff 7,022 l Wasser hinzugefügt und wird unter Stickstoff auf 80°C aufgeheizt. Anschließend werden bei 80°C und Begasung mit 1000 l/h Luft 7 l $FeSO_4$-Lösung, die 1400 g $FeSO_4$ enthält, und 3,995 l NaOH (4,75 n) in 13 Stunden so zugetropft, daß der pH-Wert in der Suspension konstant 4,0 $\pm$ 0,1 beträgt. Das sulfatfrei gewaschene, getrocknete Produkt wird im Dismembrator gemahlen.

**Beispiel 8**

In einem Edelstahlbehälter werden zu 15,309 l $FeSO_4$-Lösung, die 3061,8 g $FeSO_4$ enthält, 58,95 g $SnCl_4$ (gelöst in 20 ml konz. HCl und 400 ml $H_2O$) gegeben und in 30 Minuten auf 55°C geheizt. Die $FeSO_4$-Lösung wird mit 2250 ml 9 n NaOH versetzt und bei 55°C solange mit 400 l/h Luft oxidiert, bis der pH-Wert $\leqslant$ 2,8 beträgt. Zu 2,548 l der so erhaltenen Keimsuspension werden unter Stickstoff 7,452 l Wasser hinzugefügt und wird unter Stickstoff auf geheizt. Anschließend werden bei 80°C und Begasung mit 1000 l/h Luft 22,86 l $FeSO_4$-Lösung, die 4572 g $FeSO_4$ enthält, und 17,83 l NaOH (4,75 n) in 25 Std. so zugetropft, daß der pH-Wert in der Suspension konstant 4,0 $\pm$ 0,1 beträgt. Das sulfatfrei gewaschene, getrocknete Produkt wird im Dismembrator gemahlen.

**Patentansprüche**

1. Eisenoxidgelbpigmente mit einem Silking-Effekt $\Delta E_1^*$ < 0,5, dadurch gekennzeichnet, daß deren koloristische Werte für $L^*$ zwischen 52 und 63, für $a^*$ zwischen 8 und 14 und für $b^*$ zwischen 40 und 48 CIELAB-Einheiten, gemessen nach DIN 6174 bei einer 10 %-igen Pigmentvolumen-Konzentration (PVK) im Lack Alkydal F 48, einen mittelöligen Fettsäure-modifizierten Alkydharz mit einem Fettsäuregehalt - ausgedrückt als Triglycerid - von ca. 48 %, betragen.

2. Eisenoxidpigmente gemäß Anspruch 1, dadurch gekennzeichnet, daß deren Werte für $L^*$ zwischen 54 und 61, für $a^*$ zwischen 8,5 und 13 und für $b^*$ zwischen 41 und 48 CIELAB-Einheiten betragen.

3. Verfahren zur Herstellung der Eisenoxidgelbpigmente gemäß einem der Ansprüche 1 bis 2, dadurch gekennzeichnet, daß man die Keimbildung von nadelförmigen α-FeOOH-Gelbpigmenten in Gegenwart von Verbindungen der Elemente B, Al, Ga, Si, Ge, Sn oder Pb in Mengen von 0,05 bis 10 Gew.-%, berechnet als 3- oder 4-wertige Oxide und bezogen auf das bei der Keimbildung ausgefällte α-FeOOH, vornimmt und auf dem Gelbkeim in üblicher Weise ein Eisenoxidgelbpigment aufwachsen läßt.

4. Verfahren gemäß Anspruch 3, dadurch gekennzeichnet, daß die Menge der Verbindungen 0,15 bis 7 Gew.-%, berechnet als 3- oder 4-wertige Oxide und bezogen auf das bei der Keimbildung ausgefällte α-FeOOH, beträgt.

5. Verfahren gemäß einem der Ansprüche 3 oder 4, dadurch gekennzeichnet, daß die Verbindungen Silikate und/oder Aluminate sind.

6. Verwendung der Eisenoxidgelbpigmente gemäß einem der Ansprüche 1 bis 5 zur Einfärbung von Lacken, Anstrichstoffen und Kunststoffolien.

## EP 0 132 682 B1

### Claims

1. Iron oxide yellow pigments having a silking effect of $\Delta E_1^*$ (0.5, characterised in that their coloristic values are from 52 to 63 CIELAB units for L*, from 8 to 14 CIELAB units for a* and from 40 to 48 CIELAB units for b*, determined according to DIN 6174 at a 10 % pigment volume concentration (PVC) in the lacquer alkydal F 48, a medium heavy oily fatty acid-modified alkyd resin having a fatty acid content, expressed as triglyceride, of about 48 %.

2. Iron oxide pigments according to claim 1, characterised in that their values are from 54 to 61 CIELAB units for L*, from 8.5 to 13 CIELAB units for a* and from 41 to 48 CIELAB units for b*.

3. Process for the preparation of the iron oxide yellow pigments according to one of the claims 1 to 2, characterised in that the formation of nuclei of needle-shaped $\alpha$-FeOOH yellow pigments is carried out in the presence of compounds of the elements B, Al, Ga, Si, Ge, Sn or Pb in quantities of from 0.05 to 10 % by weight, calculated as trivalent or tetravalent oxides and based on the $\alpha$-FeOOH which is precipitated in the formation of nuclei, and an iron oxide yellow pigment is left to grow on the yellow nucleus in conventional manner.

4. Process according to claim 3, characterised in that the quantity of the compounds is from 0.15 to 7 % by weight, calculated as trivalent or tetravalent oxides and based on the $\alpha$-FeOOH precipitated in the formation of the nuclei.

5. Process according to one of the claims 3 or 4, characterised in that the compounds are silicates and/or aluminates.

6. Use of the iron oxide yellow pigments according to one of the claims 1 to 5 for colouring lacquers, paints and plastic films.

### Revendications

1. Pigments jaunes d'oxyde de fer à effet de soyage $\Delta E^*_1 < 0,5$, caractérisés en ce que leurs valeurs coloristiques se situent pour L* entre 52 et 53, pour a* entre 8 et 14 et pour b* entre 40 et 48 unités CIELAB, mesurées suivant DIN 6174 pour une concentration volumique de pigment (CVP) de 10 % dans le vernis Alkydal F 48, une résine alkyde à teneur moyenne en huiles modifiée aux acides gras, avec une teneur en acides gras - exprimée en triglycérides - d'environ 48%.

2. Pigments d'oxyde de fer selon la revendication 1, caractérisés en ce que leurs valeurs se situent pour L* entre 54 et 61, pour a* entre 8,5 et 13 et pour b* entre 41 et 48 unités CIELAB.

3. Procédé de fabrication de pigments jaunes d'oxyde de fer selon l'une des revendications 1 et 2, caractérisé en ce que l'on réalise la formation de germes de pigments jaunes aciculaires $\alpha$-FeOOH en présence de composés des éléments B, Al, Ga, Si, Ge, Sn ou Pb en quantités de 0,05 à 10 % en poids, calculées en considérant les oxydes trivalents ou tétravalents correspondants et rapportées au $\alpha$-FeOOH précipité lors de la formation de germes et laisse croître un pigment jaune d'oxyde de fer sur le germe jaune de la façon habituelle.

4. Procédé selon la revendication 3, caractérisé en ce que la quantité de composés est de 0,15 à 7 % en poids, calculée en considérant les oxydes trivalents ou tétravalents correspondants et rapportée au $\alpha$-FeOOH précipité lors de la formation de germes.

5. Procédé selon l'une des revendications 3 ou 4, caractérisé en ce que les composés sont des silicates et/ou des aluminates.

6. Utilisation des pigments jaunes d'oxyde de fer selon l'une des revendications 1 à 5 pour la pigmentation de vernis, d'enduits et de films de matière plastique.

FIG. 1